Europäisches Patentamt

European Patent Office

Office européen des brevets

(19)

(11) Veröffentlichungsnummer: **0 316 358**
**B1**

(12)     **EUROPÄISCHE PATENTSCHRIFT**

(45) Veröffentlichungstag der Patentschrift: **11.04.90**

(51) Int. Cl.[5]: **F 16 H 61/16**

(21) Anmeldenummer: **87905435.1**

(22) Anmeldetag: **01.08.87**

(86) Internationale Anmeldenummer:
**PCT/EP87/00423**

(87) Internationale Veröffentlichungsnummer:
**WO 88/01029 11.02.88 Gazette 88/04**

(54) **ELEKTRO-HYDRAULISCHE STEUERUNG FÜR EIN AUTOMATISCH ZU SCHALTENDES KRAFTFAHRZEUGGETRIEBE.**

(30) Priorität: **08.08.86 PCt/ep86/00469**

(43) Veröffentlichungstag der Anmeldung:
**24.05.89 Patentblatt 89/21**

(45) Bekanntmachung des Hinweises auf die
Patenterteilung:
**11.04.90 Patentblatt 90/15**

(84) Benannte Vertragsstaaten:
**DE FR GB IT SE**

(56) Entgegenhaltungen:
**EP-A- 179 683
DE-A-2 715 553
FR-A-2 109 792
US-A-3 628 642
US-A-4 354 236**

**Automobiltechnische Zeitschrift, Band 85, Juni
1983 R. Oldenbourg (München, DE) K. Lorenz et
al.: "Einsatz des Viergang-Automatikgetriebes 4
HP 22 mit elektronisch-hydraulischer
Steuerung", Seiten 401-405, siehe Seite 405,
Absatz 5 (in der Anmeldung erwähnt)**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **GIERER, Georg
Zehntscheuerstra e 44
D-7993 Kressbronn (DE)**

(74) Vertreter: **Raue, Reimund
Zahnradfabrik Friedrichshafen AG Löwentaler
Strasse 100 Postfach 2520
D-7990 Friedrichshafen 1 (DE)**

EP 0 316 358 B1

**Beschreibung**

Diese Erfindung betrifft eine elektro-hydraulische Steuerung für ein automatisch zu schaltendes Kraftfahrzeuggetriebe nach dem Oberbegriff von Anspruch 1.

Aus ATZ 85 (1983) 6 Seiten 393 bis 405 ist aus zwei Veröffentlichungen ein 4-Gang-Automatgetriebe mit elektronisch-hydraulischer Steuerung bekannt. Aus Absatz 4, Getriebesteuerung (Seite 402), und Absatz 5, Sicherheitsfunktionen, sowie Bild 6 und 7 dieser Veröffentlichungen ist bekannt, daß im stromlosen Zustand rein hydraulisch entsprechend der Wählschieber-Verstellung entweder vorwärts im 3. Gang oder rückwärts gefahren werden kann, wobei auch eine Neutralstellung (Leerlaufstellung) möglich ist.

Aus der Druckschrift 4 HP 22 E der ZF Getriebe GmbH Saarbrücken, Ölführungspläne, ist diese elektronischhydraulische Steuerung ausführlicher dargestellt und ergänzt Bild 6.

Dieses System ist möglich, weil damit die Steuerung eines Schongang-Getriebes erfolgt, bei dem der 4. Gang ein Schnellgang — Overdrive — ist und der Motor im 4. Gang nicht die höchste Drehzahl erreicht. Für ein 4-Gang-Getriebe mit einem direkten 4.-Gangoder einem Overdrive-Getriebe, bei dem auch die höchste Motordrehzahl im höchsten Gang erreicht wird, ist eine solche Steuerung jedoch nicht geeignet, weil eine Rückschaltung vom 4. in den 3. Gang bei Stromausfall zu überhöhten Drehzahlen im Motor und damit zur Beschädigung dieses Motors führen würde.

Ein 4-Gang-Getriebe mit Overdrive ist auch aus der US-A 43 54 236 bekannt. Fällt bei diesem Getriebe während der Fahrt die Elektronik aus, wird immer in den höchstmöglichen Gang geschaltet, und der Fahrer kann ungehindert über den Stellhebel die Gänge 3, 2 und 1 einlegen. Fahrer von Automatgetrieben sind aber gewohnt, daß über den Stellhebel eingegebene Befehle erst dann ausgeführt werden, wenn sie in bezug auf Drehzahlveränderungen zugelassen sind. Eine solche Sicherheit ist beim Ausfall der Elektronik nicht gegeben.

Es ist deshalb Aufgabe der Erfindung, eine elektronisch-hydraulische Steuerung nach dem Oberbegriff von Anspruch 1 weiterzuentwickeln, so daß bei Stromausfall keine unzulässigen Rückschaltungen möglich sind. Dabei soll der Bauaufwand sich nicht erhöhen.

Diese Aufgabe wird mit den kennzeichnenden Merkmalen von Anspruch 1 erfüllt.

Der Ausfall der Elektronik wird vom Fahrer bei einer Fahrt mit einer hohen Geschwindigkeit bis auf die vorgesehene Anzeige am Armaturenbrett aus dem Fahrverhalten des Fahrzeuges gar nicht erkannt, und er kann die Fahrt bei solchen Bedingungen unbehindert fortsetzen. Auch der Motor wird nicht überlastet, weil keine unzulässige Rückschaltung erfolgt, die zur Beschädigung des Motors führen würde. Erst bei Anforderungen, die in diesem Gang nicht mehr erfüllt werden können, z.B. Fahren in einer größeren Steigung, hat der Fahrer die Möglichkeit, das Getriebe in einen tieferen Gang zu schalten. Dazu muß jedoch der Systemdruck für den hydraulischen Teil der elektronisch-hydraulischen Steuerung kurz unterbrochen werden. Aus Sicherheitsgründen muß der Fahrer dazu den Motor abstellen und wieder anlassen. Es wäre natürlich auch möglich, diese Umschaltung in einen tieferen Gang durch Verstellen des Wählschiebers in die Neutralstellung und wieder in die Vorwärtsfahrtstellung zu bewirken. Eine so eingerichtete Steuereinrichtung würde jedoch die Sicherheitsanforderungen nicht erfüllen, weil der Fahrer die Möglichkeit hätte, diese Umschaltung bei noch zu hoher Fahrgeschwindigkeit durchzuführen. Mit den Ansprüchen 2 bis 9 wird die Erfindung in vorteilhafter Weise weiter ausgestaltet.

Eine Verstellung des Wählschiebers in die Position für die Rückwärtsfahrt (R) bewirkt jedoch auch ein Fahren in diese Richtung, ohne daß im Vorwärtsfahrbereich bereits auf einen tieferen Gang geschaltet worden ist. Mit der Schaltung des Automatgetriebes in einen tieferen Gang, z.B. den 3. Gang, bei einem 4-Gang-Getriebe, beim Anlassen oder Wiederanlassen nach dem Ausfall der Elektronik, kann auch aus dem Stand in Vorwärtsfahrtrichtung angefahren werden. Durch die Verwendung für an und für sich nötige Schalt- und Steuerventile für die hydraulische Steuereinrichtung, die bei Ausfall der Elektronik die Weiterfahrt und das Anfahren in Vorwärts- und Rückwärtsfahrtrichtung ohne Gefährdung des Motors bewirkt, wird der Bauaufwand nicht erhöht. Allein durch die geschickte Verbindung der zwei Sicherheitsventile mit den drei Schaltventilen wird bei einer elektronisch-hydraulischen Schaltung für ein 4-Gang-Automatgetriebe die Aufgabe erfüllt. Durch die Mehrfachnutzung eines Magnetventiles ist es möglich, das an und für sich nötige Magnetventil für die R-Gang-Sicherung einzusparen.

Aus der EP-A 179 683 ist zwar eine elektrohydraulische Steuerung für ein Automatgetriebe mit zwei Getriebeeingangswellen bekannt, mit dem auch bei Stromausfall eine Weiterfahrt möglich ist dabei wird durch die Umschaltung eines Magnetventils in Verbindung mit der Umschaltung eines Steuerschiebers infolge des Stromausfalls von der leistungsverzweigten Fahrweise auf rein hydraulische Fahrweise über den Drehmomentwandler umgestellt. Es muß also eine Kupplung gelöst und eine weitere geschlossen werden. Während im Normalbetrieb eine solche Überschneidungsschaltung zum Schutz der Kupplungen mit viel Steueraufwand erfolgt, ist für den Notbetrieb dieser nicht vorgesehen und auch nicht möglich.

Es zeigen:
Fig. 1 ein 4-Gang-Automatgetriebe in schematischer Darstellung mit einem direkten 4. Gang.
Fig. 2 ein 4-Gang-Automatgetriebe nach Fig. 1, jedoch mit einem Schongang — Overdrive —.

Fig. 3 eine Tabelle über die eingeschalteten Kupplungen, Bremsen und Magnetventile in den einzelnen Gängen bei einem Getriebe nach Fig. 1.

Fig. 4 ein vereinfacht dargestelltes Steuer- und Ölführungsschema.

Fig. 5 ein vereinfacht dargestelltes Steuer- und Ölführungsschema in einer weiteren Ausführung.

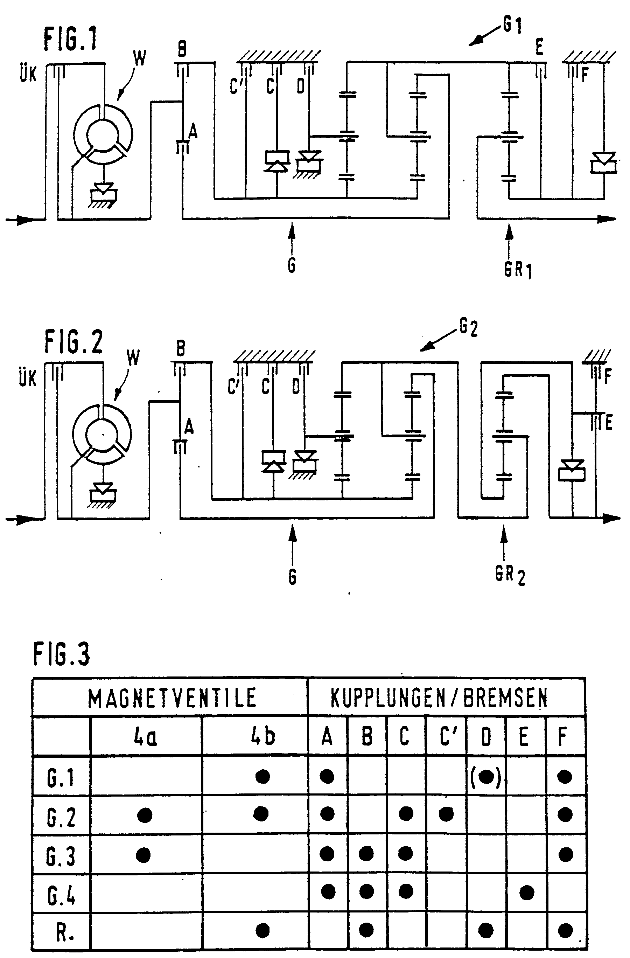

Das Automatgetriebe G 1 nach Fig. 1 wird von einem nicht dargestellten Antriebsmotor über einen hydro-dynamischen Drehmomentwandler W mit Überbrückungskupplung ÜK angetrieben und besteht aus einem Grundgetriebe G mit den Kupplungen A und B sowie den Bremsen C', C und D sowie einem Gruppengetriebe GR 1 für den 4. Gang mit der Kupplung E und der Bremse F. Weiter sind zur Verbesserung der Schaltung und Steuerung noch nicht bezeichnete Freiläufe sowohl im Grund wie im Gruppengetriebe angeordnet.

In dem Automatgetriebe G 2 nach Fig. 2 ist die Anordnung des hydro-dynamischen Drehmomentwandlers W und des Grundgetriebes G gleich dem nach Fig. 1, nur das Gruppengetriebe GR 2 ist mit dem Grundgetriebe G anders verbunden, und die Kupplung E und Bremse F sind anders angeordnet.

Aus der Tabelle nach Fig. 3, die für das Getriebe G 1 nach Fig. 1 zutrifft, ist leicht ableitbar, welche Kupplungen und Bremsen A bis F und Magnetventile 4 a und 4 b in den einzelnen Gängen geschlossen sind und von der elektronisch-hydraulischen Steuerung und im Falle der Magnetventile von dem elektronischen Steuergerät 3 ein- und ausgeschaltet und in bezug auf die Kupplungen und Bremsen mit Systemdruck beaufschlagt werden.

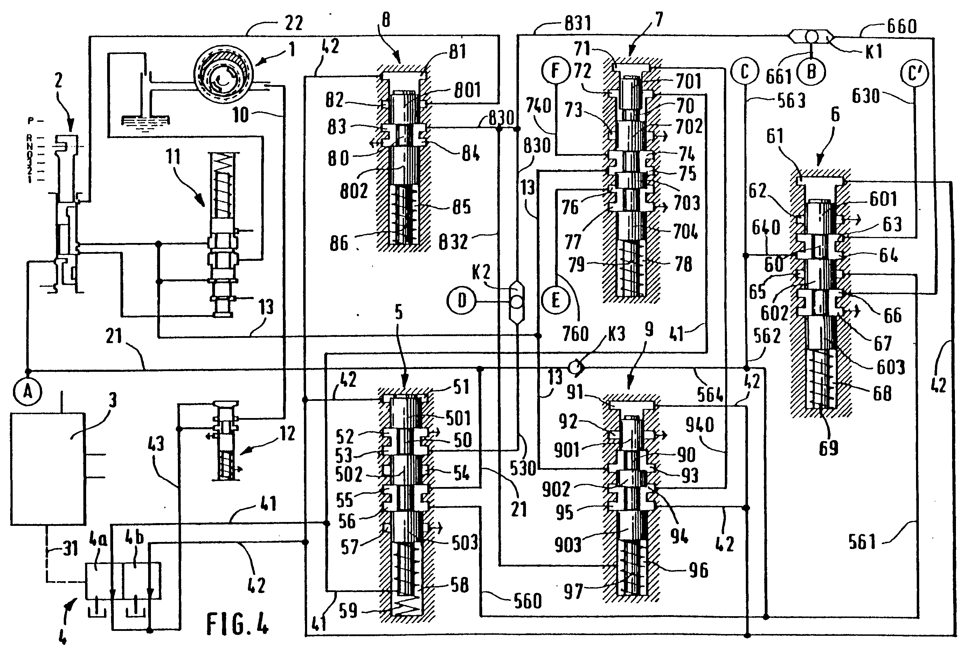

In dem vereinfacht dargestellten Steuerschema nach Fig. 4 ist eine Druckmittelquelle 1 über eine Leitung 10 mit einem Hauptdruckventil 11 sowie mit einem Wählschieber 2 und dem Systemdruckkanal 13 verbunden. Der Wählschieber 2 hat über Kanal 21 noch eine Verbindung mit der Kupplung für die Vorwärtsfahrt A sowie dem 5. Ringraum 55 vom 1-2-Schaltventil 5. Weiterhin führt vom Wählschieber 2 noch ein Kanal 22 zum zweiten Ringraum 82 des Rückwärtsgang-Sicherheitsventiles 8, der jedoch nur bei der Verstellung des Wählschiebers in die Rückwärtsfahrtstellung R mit Systemdruck befüllt ist. Der Systemdruckkanal 13 hat einen Abzweig zum Druckreduzierventil 12 sowie zum dritten Ringraum 93 vom Sicherheitsventil 9 und zum fünften Ringraum 75 vom 3-4-Schaltventil 7. Vom Druckreduzierventil 12 werden über die Steuerdruckleitung 43 die Magnetventile 4 a und 4 b mit Steuerdruck versorgt. Die Magnetventile 4 a und 4 b werden vom elektronischen Steuergerät 3 über die elektrische Steuerleitung 31 geschaltet und sind im nicht geschalteten Zustand entlüftet. Vom ersten Magnetventil 4 a führt eine erste Steuerleitung 41 zum zweiten Ringraum 72 vom 3-4-Schaltventil 7 und zum Federraum 58 vom 1-2-Schaltventil 5. Die zweite Steuerleitung 42 führt vom zweiten Magnetventil 4 b zu den ersten stirnseitigen Ringräumen 51, 61, 81, 91 von den Schaltventilen 5, 6 und vom Rückwärtsgang-Sicherheitsventil 8 und vom Sicherheitsventil 9 sowie zum fünften Ringraum 95 dieses Sicherheitsventiles 9. Alle Schaltventile 5, 6, 7, das Rückwärtsgang-Sicherheitsventil 8 und das Sicherheitsventil 9 haben im Ventilgehäuse eingearbeitet mehrere Ringräume 51-57, 61-67, 71-77, 81-84, 91-95 und je einen Kolbenschieber 50, 60, 70, 80, 90, der von je einer in einem Federraum 58, 68, 78, 85, 96 angeordneten Druckfeder 59, 69, 79, 86, 97 in eine Endstellung gedrückt wird. Das 1-2-Schaltventil 5 hat noch eine Druckmittelverbindung vom dritten Ringraum 53 über die Leitung 530 und das zweite Kugelventil K 2 zur Rückwärtsgang-Bremse D. Der sechste Ringraum 56 ist über die Leitung 560, 561 mit dem fünften Ringraum 65 vom 2-3-Schaltventil 6 verbunden, und der zweite 52 und der siebente Ringraum 57 haben eine Entlüftung, und der Kolbenschieber 50 hat zur Bildung von Steuerkanten drei Steuerkolben 501, 502 und 503. Das 2-3-Schaltventil 6 hat noch eine Druckmittelverbindung vom dritten Ringraum 63 über die Leitung 630 zur Bremse C' und aus dem sechsten Ringraum 66 über die Leitung 660 und das erste Kugelventil K 1 und Leitung 661 zur Kupplung B. Weiter führt eine Leitung 640 vom vierten Ringraum 64 zur Bremse C und der zweite 62 und siebente Ringraum 67 haben eine Entlüftung. Der Kolbenschieber 60 hat zur Bildung von Steuerkanten drei Steuerkolben 601, 602 und 603. Das 3-4-Schaltventil 7 hat noch eine Druckmittelverbindung vom vierten Ringraum 74 über die Leitung 740 zur Bremse F für den 1. bis 3. Gang und R-Gang und vom sechsten Ringraum 76 über die Leitung 760 zur Kupplung E für den 4. Gang. Der dritte 73 und siebente Ringraum 77 haben eine Entlüftung, und der Kolbenschieber 70 hat zur Bildung von Steuerkanten vier Steuerkolben 701-704, wobei der Steuerkolben 701 gegenüber den übrigen Steuerkolben einen kleineren Durchmesser aufweist. Das Rückwärtsgang-Sicherheitsventil 8 hat noch eine Druckmittelverbindung vom dritten Ringraum 83 über die Leitung 830 und das zweite Kugelventil K 2 zur Rückwärtsgang-Bremse D und über die Leitung 831 und das erste Kugelventil K 1 und Leitung 661 zur Kupplung B. Ein Abzweig 832 von Leitung 830 führt zum Federraum 96 vom Sicherheitsventil 9, und der vierte Ringraum 84 hat eine Entlüftung. Der Kolbenschieber 80 hat zur Bildung von Steuerkanten zwei Steuerkolben 801 und 802. Das Sicherheitsventil 9 hat noch eine Druckmittelverbindung vom vierten Ringraum 94 über Leitung 940 zum ersten stirnseitigen Ringraum 71 des 3-4-Schaltventiles 7, und der zweite Ringraum 92 hat eine Entlüftung und der Kolbenschieber 90 zur Bildung von Steuerkanten noch drei Steuerkolben 901-903, wobei der Steuerkolben 901 einen kleineren Durchmesser als die übrigen Steuerkolben 902 und 903 aufweist. Weiter besteht noch eine Verbindungsleitung 562, 564 von der Leitung 560 zur Leitung 640 und zum Kanal 21 und damit zur Kupplung A. Zwischen der Verbindungsleitung 564 und dem Kanal 21 — Zuleitung zur Kupplung A — befindet sich noch ein drittes Kugelventil K 3, das nur einen Durchfluß in der beschriebenen Richtung zuläßt. Die elektronisch-hydraulische Steuereinrichtung nach Fig. 4 wirkt wie folgt: Vom elektronischen Steuergerät 3 werden die Magnetventile 4 a und 4 b geschaltet. Weiterhin übernimmt die Elektronik die Modulierdruckregelung und die Schaltung der Wandler-Überbrückungskupplung; beides ist in dem vereinfachten Steuerschema nach Fig. 4 nicht dargestellt. Bei voller Funktion der elektro-hydraulischen Steuerung wird im 1. Gang das Magnetventil 4 b von dem elektronischen Steuergerät 3 eingeschaltet, so daß über die zweite Steuerleitung 42 die Schaltventile 5, 6 und 7 gegen den Druck der Feder 59, 69 und 79 umgeschaltet werden. Über Kanal 21 wird die Kupplung A, und über Kanal 13 und Leitung 740 die Bremse F geschlossen. Nach Fig. 3 wird im 2. Gang das Magnetventil 4 a ebenfalls geschaltet, so daß über die erste Druckleitung 41 Steuerdruck dem Federraum 58 des 1-2-Schaltventiles 5 und dem zweiten Ringraum 72 des 3-4-Schaltventiles 7 zugeleitet wird. Das 1-2-Schaltventil 5 wird dadurch in die Ausgangsstellung zurückgeschoben. Dadurch kann der Systemdruck von Kanal 21 über die Ringräume 55 und 56 und die Leitungen 560, 562 und 563 die Bremse C, und über die Leitung 640 und die Ringräume 64 und 63 des 2-3-Schaltventiles 6 sowie die Leitung 630 die Bremse C′ schließen. Im 3. Gang wird das Magnetventil 4 b abgeschaltet und die zweite Steuerleitung 42 über das Magnetventil entlüftet. Dadurch geht das 2-3-Schaltventil 6 in die Ausgangsstellung zurück, und die Bremse C′ wird über die Leitung 630 und die Ringräume 63 und 62 entlüftet. Gleichzeitig wird über die Leitung 561 und die Ringräume 65 und 66 vom 2-3-Schaltventil 6 über die Leitung 660 das erste Kugelventil K 1 und die Leitung 661 die Kupplung B geschlossen. Im 4. Gang wird auch das Magnetventil 4 a abgeschaltet und die erste Steuerleitung 41 entlüftet. Dadurch geht das 3-4-Schaltventil 7 in die Ausgangslage zurück, die Bremse F wird über die Leitung 740 und den vierten und dritten Ringraum entlüftet und die Kupplung E über den Kanal 13, den fünften und sechsten Ringraum und die Leitung 760 geschlossen. Diese Kombination ermöglicht es ohne eine Zeitverzögerung, die Schaltventile 5, 6 und 7 beliebig zu schalten. Ebenfalls kann mit dem Magnetventil 4 b gleichzeitig das R-Gang-Sicherheitsventil 8 betätigt werden. Dadurch ist es möglich, ein Magnetventil einzusparen. Die Schaltventile 5, 6 und 7 sind gegeneinander hydraulisch verriegelt, so daß keine Fehlschaltungen, die zur Zerstörung bzw. Blockierung des Getriebes führen könnten, erfolgen können. Beim elektronischen Erkennen der Position R vom Wählschieber 3 und bei einer Fahrzeuggeschwindigkeit größer einer Grenzgeschwindigkeit wird zusätzlich zum Magnetventil 4 a auch das Magnetventil 4 b eingeschaltet. Über die zweite Steuerleitung 42 wird das Rückwärtsgang-Sicherheitsventil 8 über Ringraum 81 gegen die Feder 86 verschoben und damit der über Kanal 22 vom Wählschieber 3 kommende Systemdruck im zweiten Ringraum abgesperrt.

Erst nach Unterschreitung der Grenzgeschwindigkeit wird das Magnetventil elektronisch ausgeschaltet, und über den Ringraum 82 und 83 und die Leitung 830 und das zweite Kugelventil K 2 kann die Rückwärtsgang-Bremse D und über die Leitung 831 und das erste Kugelventil K 1 sowie die Leitung 661 die Kupplung B geschlossen werden. Bei Ausfall des elektronischen Steuergerätes 3 während der Fahrt und der damit verbundenen Entlüftung der Steuerleitungen 41 und 42 wird das Sicherheitsventil über den Systemdruck von Kanal 13 im Ringraum 93 in der geschalteten Stellung gehalten. Das 3-4-Schaltventil 7 befindet sich in der durch die Feder 79 bewirkten Endstellung, so daß Systemdruck von Kanal 13 über die Ringräume 75 und 76 und die Leitung 760 zur Kupplung E fließt und diese geschlossen wird. Über den Systemdruckkanal 21 ist die Kupplung A direkt, und über das 1-2-Schaltventil, Ringräume 55 und 56 sowie die Leitungen 560, 562 und 563 ist die Bremse C, und über die Leitung 560, 561 und das 2-3-Schaltventil 6, Ringräume 65 und 66 sowie die Leitung 660 und das erste Kugelventil K 1 und die Leitung 661 auch die Kupplung B geschlossen. Damit wird der 4. Gang gehalten oder geschaltet und eine Weiterfahrt zunächst nur in diesem Gang möglich. Zum Weiterfahren in einen tieferen Gang oder zum Anfahren muß zunächst der Systemdruck kurzzeitig unterbrochen werden. Dazu ist es zweckmäßig, den Motor auszuschalten und wieder neu anzulassen, weil damit gewährleistet ist, daß bei der Umschaltung des Getriebes auf einen tieferen Gang, in dem auch das Anfahren möglich ist, die Motordrehzahl nicht unzulässig hoch ist. Wenn der Motor neu gestartet wird, kommt der Systemdruck über Kanal 13, die Ringräume 93, 94 und Leitung 940 zum Ringraum 71. Dadurch wird das 3-4-Schaltventil 7 in die dargestellte Stellung gebracht. Bei der Verstellung des Wählschiebers von der Position N (Neutral), in der er angelassen worden ist, in die Position Vorwärtsfahrt, wird der Systemdruck von Kanal 13 über die Ringräume 75 und 74 und die Leitung 740 zur Bremse F geleitet und diese geschlossen, während die Kupplung E über die Leitung 760 und die Ringräume 76 und 77 entlüftet wird. Über den Kanal 21 wird durch den Systemdruck die Kupplung A direkt und über das 1-2-Schaltventil 5 und die Leitungen 560, 562, 563, die Bremse C und über die Leitung 560, 561, das 2-3-Schaltventil 6, Leitung 660, Kugelventil K 1 und Leitung 661 die Kupplung B geschlossen. Ist das elektronische Steuergerät 3 ausgefallen, und wird der Wählschieber 3 auf Rückwärtsfahrt R verstellt, so gelangt der Systemdruck über Kanal 22 zum Rückwärtsgang-Sicherheitsventil 8. Über die Ringräume 82 und 83 wird dabei die Leitung 830 befüllt und über das zweite Kugelventil K 2 die Rückwärtsgang-Bremse D und über das erste Kugelventil K 1 und die Leitung 661 die Kupplung B geschlossen. Gleichzeitig wird über den Abzweig 832 vom Kanal 830 Systemdruck in den Federraum 96 des Sicherheitsventiles 9 geleitet. Der Systemdruck vom Kanal 13 wird dabei über den dritten 93 und vierten Ringraum 94 und die Leitung 940 zum stirnseitig ersten Ringraum 71 vom 3-4-Schaltventil 7 geleitet, so daß über den Ringraum 75 und 74 der Systemdruck vom zweiten Abzweig des Kanals 13 über die Leitung 740 die Bremse F geschlossen wird. In dieser Schaltstellung des 3-4-Schaltventiles wird die Kupplung E entlüftet.

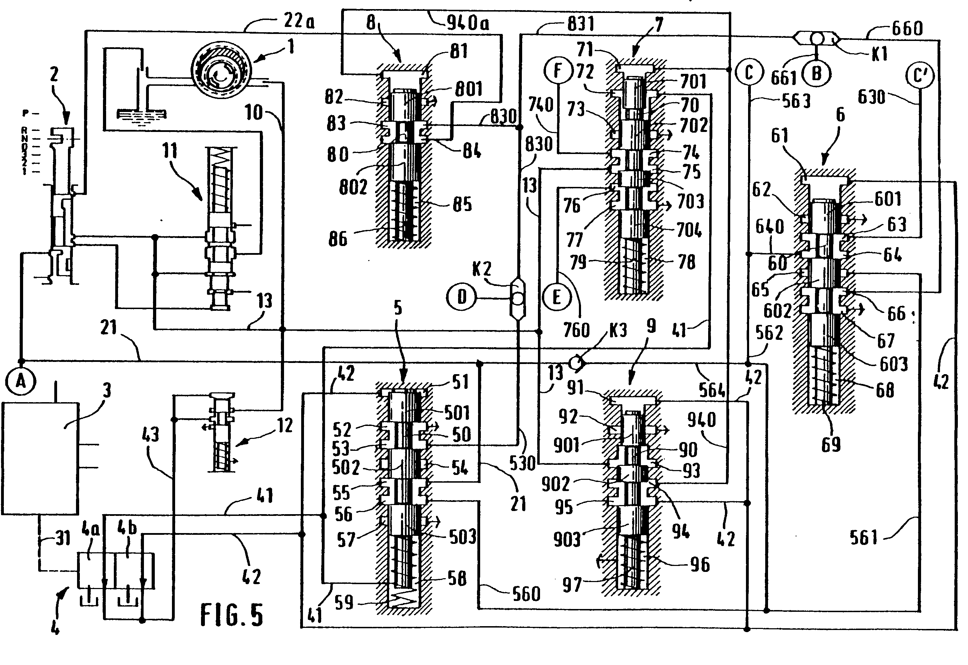

Fig. 5 ist eine weitere Ausführung der Erfindung und der Fig. 4 sehr ähnlich. Abweichend von Fig. 4 ist die zweite Steuerleitung 42 nicht mit zum stirnseitigen Ringraum 81 vom R-Gang-Sicherheitsventil 8 geführt, und der Abzweig 832 von der Leitung 830 zum Federraum 96 ist auch nicht ausgeführt. Dafür führt Leitung 940 nicht nur zum ersten stirnseitigen Ringraum 71 des 3-4-Schaltventiles 7, sondern weiter als Leitung 940 a bis zum ersten stirnseitigen Ringraum 81 vom R-Gang-Sicherheitsventil 8, und über Kanal 22 a ist der vierte Ringraum 84 für den Systemdruck bei R-Gang-Stellung des Wählschiebers 2 mit diesem verbunden, während der zweite Ringraum 82 entlüftet ist. Mit dieser abweichenden Kanal- und Leitungsführung kann beim Ausfall der Elektronik im Rückwärtsgang gefahren werden, ohne daß der Systemdruck kurzzeitig unterbrochen wird.

Bezugszeichen

1 Druckmittelquelle.
10 Leitung.
11 Hauptventil.
12 Druckreduzierventil.
13 Kanal für Systemdruck.
2 Wählschieber.
21 Kanal für Systemdruck (Vorwärtsfahrtrichtung).
22, 22 a Kanal für Systemdruck (Rückwärtsfahrtrichtung).
3 Elektronisches Steuergerät.
31 Elektrische Steuerleitung.
4 Magnetventile.
4 a Erstes Magnetventil.
4 b Zweites Magnetventil.
41 Erste Steuerleitung.
42 Zweite Steuerleitung.
43 Steuerdruckleitung.
5 1-2-Schaltventil.
50 Kolbenschieber.
501-503 Steuerkolben.
51-57 Ringräume.
58 Federraum.
59 Druckfeder.
530 Leitung.
560-564 Leitungen.
6 2-3-Schaltventil.
60 Kolbenschieber.
601-603 Steuerkolben.
61-67 Ringräume.
68 Federraum.
69 Druckfeder.
630 Leitung.
640 Leitung.
660 Leitung.
661 Leitung.
7 3-4-Schaltventil.
70 Kolbenschieber.
701-704 Steuerkolben.

71-77 Ringräume.
78 Federraum.
79 Druckfeder.
740 Leitung.
760 Leitung.
8 R-Gang-Sicherheitsventil.
80 Kolbenschieber.
801 Steuerkolben.
802 Steuerkolben.
81-84 Ringräume.
85 Federraum.
86 Druckfeder.
830 Leitung.
831 Leitung.
832 Abzweig.
9 Sicherheitsventil.
90 Kolbenschieber.
901-903 Steuerkolben.
91-95 Ringräume.
940, 940 a Leitung.
K1 Erstes Kugelventil.
K 2 Zweites Kugelventil.
K 3 Kugelventil einseitig.
A-F Kupplungen, Bremsen.
G 1 Automatgetriebe.
G 2 Automatgetriebe.
G Grundgetriebe.
GR 1 Gruppengetriebe.
GR 2 Gruppengetriebe.
W Hydrodynamischer Drehmomentwandler.
ÜK Überbrückungskupplung.

**Patentansprüche**

1. Elektro-hydraulische Steuerung für ein automatisch zu schaltendes Kraftfahrzeuggetriebe (G 1, G 2) mit einem Wählschieber (2), zumindest für die Neutralstellung (N) sowie für die Vorwärts- (D) und Rückwärtsfahrt (R), einem elektronischen Steuergerät (3), mit Federkraft in der entlüfteten Neutralstellung gehaltenen Magnetventilen (4), einer Druckmittelquelle (1), Drucksteuer- und Schaltventilen (5, 6, 7) zur Betätigung von Gangschaltkupplungen und -bremsen (A-F) sowie mit einer Rückschaltsicherung zur Verhinderung von Rückschaltungen bei noch zu hoher Fahrgeschwindigkeit und einer Einrichtung, die beim Ausfall der Elektronik während der Fahrt das Automatgetriebe (G 1, G 2) in dem höchstmöglichen Gang hält oder schaltet, dadurch gekennzeichnet, daß in einer Steuereinrichtung (5, 6, 7, 9) ein Sicherheitsventil (9) angeordnet ist, das beim Ausfall des elektronischen Steuergerätes (3) während der Fahrt über den Systemdruck (Kanal 13, Ringraum 93) in der geschalteten Stellung gehalten und über das unter der Wirkung einer Feder (79) in einer Endstellung befindliche 3-4-Schaltventil (7) die Kupplung für den höchsten Gang (E) geschlossen, während beim Ausfall des elektronischen Steuergerätes (3) vor dem Start oder Wiederstarten des Motors über den Systemdruck (Kanal 13) und das nicht geschaltete Sicherheitsventil (9) das 3-4-Schaltventil (7) geschaltet und die Bremse (F) für einen niedrigeren Gang geschlossen wird.

2. Steuereinrichtung nach Anspruch 1, dadurch gekennzeichnet, daß unabhängig vom Ausfall des elektronischen Steuergerätes (3) nach dem Starten oder Wiederstarten des Motors und der Verstellung des Wählschiebers (2) in die R-Gangstellung (R) ein Fahren im Rückwärtsgang möglich ist (Fig. 4).

3. Steuereinrichtung nach Anspruch 1, dadurch gekennzeichnet, daß unabhängig vom Ausfall des elektronischen Steuergerätes (3) beim Verstellen des Wählschiebers (2) in die R-Gangstellung (R) ein Fahren im Rückwärtsgang möglich ist (Fig. 5).

4. Steuereinrichtung nach Anspruch 1, dadurch gekennzeichnet, daß mit einem ausgefallenen elektronischen Steuergerät (3) nach dem Starten des Motors und durch Verstellung des Wählschiebers (2) in die Vorwärtsfahrtrichtung (D) ein Anfahren in einem vorbestimmten tieferen Vorwärtsgang möglich ist.

5. Steuereinrichtung nach Anspruch 1, dadurch gekennzeichnet, daß die Steuereinrichtung eine hydraulische Steuereinrichtung (5, 6, 7, 9) ist.

6. Steuereinrichtung nach Anspruch 1, dadurch gekennzeichnet, daß zum Schalten für ein 4-Gang-Automatgetriebe (G 1, G 2) drei Schaltventile (5, 6, 7), ein Sicherheitsventil (9), ein R-Gang-Sicherheitsventil (8) und zwei Magnetventile (4a, 4b) angeordnet sind.

7. Steuereinrichtung nach Anspruch 6, dadurch gekennzeichnet, daß
die Druckmittelquelle (1) über eine Leitung (10) mit dem Hauptdruckventil (11), dem Wählschieber (2) und einem Kanal (13) für den Systemdruck,
der Wählschieber (2) über einen Kanal (21) für Systemdruck mit der Kupplung für die Vorwärtsfahrt (A) und einem fünften Ringraum (55) vom 1-2-Schaltventil (5) und über einen Kanal (22), der bei Verstellung des Wählschiebers (2) in die R-Gang-Stellung mit Systemdruck befüllt ist, mit einem zweiten Ringraum (82) vom R-Gang-Sicherheitsventil (8) verbunden ist,
ein. Systemdruck-Abzweig vom Kanal (13) zum Druckreduzierventil (12) sowie zu einem dritten Ringraum (93) vom Sicherheitsventil (9) und zu einem fünften Ringraum (75) vom 3-4-Schaltventil (7) führt, ein reduzierter Druck als Steuerdruck über eine Steuerdruckleitung (43) zu den Magnetventilen (4a, 4b) geleitet wird, und diese über eine elektrische Steuerleitung (31) mit dem elektronischen Steuergerät (3) verbunden sind,
vom ersten Magnetventil (4a) eine erste Steuerleitung (41) zu einem zweiten Ringraum (72) vom 3-4-Schaltventil (7) und zu einem Federraum (58) vom 1-2-Schaltventil (5) und vom zweiten Magnetventil (4b) eine zweite Steuerleitung (42) zu den ersten stirnseitigen Ringräumen (51, 61, 81, 91) vom R-Gang-Sicherheitsventil (8) den 1-2- und 2-3-Schaltventilen (5, 6) und zum Sicherheitsventil (9) sowie zu einem fünften Ringraum (95) dieses Sicherheitsventiles führt,
daß alle Schaltventile (5, 6, 7), das R-Gang-Sicherheitsventil (8) und das Sicherheitsventil (9) im Ventilgehäuse-eingearbeitete Ringräume (51-57, 61-67, 71-77, 81-84, 91-95) und je einen Kolbenschieber (50, 60, 70, 80, 90) aufweisen, der von je einer in einem Federraum (58, 68, 78, 85, 96) angeordneten Druckfeder (59, 69, 79, 86, 97) in eine Endstellung gedrückt wird, und
das 1-2-Schaltventil (5) noch eine Druckmittelverbindung vom dritten Ringraum (53) über eine Leitung (530) und ein zweites Kugelventil (K 2) zur Rückwärtsgang-Bremse (D) hat, daß der sechste Ringraum (56) über die Leitungen (560, 561) mit dem fünften Ringraum (65) vom 2-3-Schaltventil (6) verbunden ist, und der zweite (52) und der siebente Ringraum (57) eine Entlüftung haben, und daß der Kolbenschieber (50) zur Bildung von Steuerkanten drei Steuerkolben (501, 502, 503) aufweist,
das 2-3-Schaltventil (6) noch eine Druckmittelverbindung vom dritten Ringraum (63) über eine Leitung (630) zur Bremse (C') und aus dem sechsten Ringraum (66) über eine Leitung (660) das erste Kugelventil (K 1) und eine Leitung (661) zur Kupplung (B) aufweist und über den vierten Ringraum (64) und eine Leitung (640) zur Bremse (C) hat, der zweite (62) und siebente Ringraum (67) eine Entlüftung haben, und daß der Kolbenschieber (60) zur Bildung von Steuerkanten drei Steuerkolben (601, 602, 603) aufweist,
das 3-4-Schaltventil (7) noch eine Druckmittelverbindung vom vierten Ringraum (74) über eine Leitung (740) zur Bremse (F) für den 1. bis 3. Gang und den R-Gang und vom sechsten Ringraum (76) über eine Leitung (760) zur Kupplung (E) für den 4. Gang hat, der dritte und siebente Ringraum (73, 77) eine Entlüftung haben, und daß der Kolbenschieber (70) zur Bildung von Steuerkanten vier Steuerkolben (701-704) aufweist,
das R-Gang-Sicherheitsventil (8) noch eine Druckmittelverbindung vom dritten Ringraum (83) über eine Leitung (830) und ein zweites Kugelventil (K 2) zur R-Gang-Bremse (D) und über eine Leitung (831) und das erste Kugelventil (K 1) und eine Leitung (661) zur Kupplung (B) hat und von der Leitung (830) noch ein Abzweig (832) zum Federraum (96) vom Sicherheitsventil (9) führt, der vierte Ringraum (84) eine Entlüftung hat und der Kolbenschieber (80) zur Bildung von Steuerkanten zwei Steuerkolben (801, 802) aufweist,
das Sicherheitsventil (9) noch eine Druckmittelverbindung vom vierten Ringraum (94) über eine Leitung (940) zum ersten stirnseitigen Ringraum (71) des 3-4-Schaltventils (7) sind, der zweite Ringraum (92) eine Entlüftung hat und der Kolbenschieber (90) zur Bildung von Steuerkanten drei Steuerkolben (901-903) aufweist, und daß noch eine Druckmittelverbindung von der Leitung (640) zur Leitung (560) und über die Leitung (564) und ein drittes, nur einseitig öffnendes Kugelventil (K 3) zum Kanal (21) und damit zur Kupplung (A) besteht.

8. Steuereinrichtung nach Anspruch 6, dadurch gekennzeichnet, daß beim Ausfall des elektronischen Steuergerätes (3) während der Fahrt und der damit verbundenen Entlüftung der Steuerleitungen (41, 42) über den Systemdruckkanal (13) das Sicherheitsventil (9) in der geschalteten Stellung gehalten und über das 3-4-Schaltventil (7) und Leitung (760) die Kupplung für den 4. Gang (E) geschlossen wird, über den Systemdruckkanal (21) die Kupplung (A) direkt und über das 1-2-Schaltventil (5) und die Leitungen (560, 562, 563) die Bremse (C) und über die Leitungen (560, 561) das 2-3-Schaltventil (6) sowie über die Leitung (660) das Kugelventil (K 1) und Leitung (661) die Kupplung (B) geschlossen wird.

9. Steuereinrichtung nach Anspruch 6, dadurch gekennzeichnet, daß beim Ausfall des elektronischen Steuergerätes (3) vor dem Anlassen oder Wiederanlassen des Motors und der Betätigung des Wählschiebers (2) auf Vorwärtsfahrt (D) der Systemdruck vom Kanal (13) über das Sicherheitsventil (9) und die Leitung (940) zum 3-4-Schaltventil (7) geleitet und dieses gegen den Druck einer Feder (79) verschiebt, wobei die Kupplung für den 4. Gang (E) entlüftet und die Bremse (F) über den Systemdruck vom Kanal (13) und Leitung (740) geschlossen wird, über den Systemdruckkanal (21) die Kupplung (A) direkt und über das 1-2-Schaltventil (5) und die Leitungen (560, 562, 563), die Bremse (C) und über die Leitungen (560, 561) das 2-3-Schaltventil (6) und über die Leitung (660), das Kugelventil (K 1) und Leitung (661) die Kupplung (B) geschlossen wird.

10. Steuereinrichtung nach Anspruch 6, dadurch gekennzeichnet, daß beim Ausfall des elektronischen Steuergeräts (3) und der Betätigung des Wählschiebers (3) auf Rückwärtsfahrt (R) der Systemdruck über den Kanal (22) zum R-Gang-Sicherheitsventil (8) und über die Leitung (830) und das zweite Kugelventil (K 2) die R-Gang-Bremse (D) und über die Leitung (831) das erste Kugelventil (K 1) und Leitung (661) die Kupplung (E) geschlossen wird sowie über den Abzweig (832) von Leitung (830) Systemdruck in den Federraum (96) des Sicherheitsventils (9) geleitet wird und dieses so schaltet, daß Systemdruck vom Kanal (13) über Leitung (940) das 3-4-Schaltventil (7) schaltet und der Systemdruck von Kanal (13) über die Leitung (740) die Bremse (F) schließt, während die Kupplung (E) über das 3-4-Schaltventil (7) entlüftet wird.

**Revendications**

1. Commande électro-hydraulique pour une boîte de vitesses automatique (G1, G2) d'un véhicule automobile, comportant un tiroir de sélection (2) au moins pour les positions de point mort (N), de marche avant (D) et de marche arrière (R), un appareil électronique de commande (3), des électrovannes (4) maintenues par la force de ressorts dans une position neutre de mise en décharge, une source de fluide sous pression (1), des soupapes de commande de pression et de changement de rapports (5, 6, 7) pour actionner des embrayages et freins (A-F) de changement de rapports, ainsi qu'un dispositif de protection de marche arrière pour empêcher d'enclencher la marche arrière à une trop grande vitesse de marche, et un dispositif qui maintient ou enclenche la boîte automatique (G1, G2) sur le rapport le plus haut possible en cas de panne de l'électronique pendant la marche, caractérisée en ce qu'elle comporte, dans un dispositif de commande (5, 6, 7, 9), une soupape de sécurité (9) qui, en cas de panne de l'appareil électronique de commande (3) pendant la marche, est maintenue en position enclenchée par la pression d'alimentation (conduit 13, chambre annulaire 93), l'embrayage du rapport le plus élevé (E) étant fermé par la soupape (7) de commande de commutation 3-4 mise dans une position de butée par l'effet d'un ressort (79), tandis qu'en cas de panne de l'appareil électronique de commande (3) avant le démarrage ou le redémarrage du moteur, la soupape (7) de commande de commutation 3-4 est enclenchée et le frein (F) actionnant un rapport inférieur est fermé, au moyen de la pression d'alimentation (conduit 13) et de la position non enclenchée de la soupape de sécurité (9).

2. Commande selon la revendication 1, caractérisée en ce qu'une marche sur le rapport de marche arrière est possible (fig. 4) indépendamment de la panne de l'appareil électronique de commande (3), après le démarrage ou redémarrage du moteur et la mise du tiroir de sélection (2) dans la position de marche arrière (R).

3. Commande selon la revendication 1, caractérisée en ce qu'une marche sur le rapport de marche arrière (fig. 5) est possible indépendamment de la panne de l'appareil électronique de commande (3), lorsque l'on met le tiroir de sélection (2) dans la position de marche arrière (R).

4. Commande selon la revendication 1, caractérisée en ce que, avec un appareil électronique de commande (3) en panne, un démarrage sur un rapport inférieur prédéterminé de marche avant est possible après le démarrage du moteur et par la mise du tiroir de sélection (2) en position de marche avant (D).

5. Commande selon la revendication 1, caractérisée en ce que le dispositif de commande est un dispositif hydraulique (5, 6, 7, 9).

6. Commande selon la revendication 1, caractérisée en ce qu'elle comporte, pour commander les changements de rapports dans une boîte automatique à quatre rapports (G1, G2), trois soupapes de changement de rapports (5, 6, 7), une soupape de sécurité (9), une soupape de sécurité de marche arrière (8) et deux électrovannes (4a, 4b).

7. Commande selon la revendication 6, caractérisée en ce que:

la source de fluide sous pression (1) est reliée par une conduite (10) à la soupape principale de pression (11), au tiroir de sélection (2) et à un conduit (13) de pression d'alimentation,

le tiroir de sélection (2) est relié par un conduit (21) de pression d'alimentation à l'embrayage de marche avant (A) et à une cinquième chambre annulaire (55) de la soupape de commutation 1-2 (5) et par un conduit (22), recevant la pression d'alimentation en cas de mise du tiroir de sélection (2) en position de marche arrière, à une deuxième chambre annulaire (82) de la soupape de sécurité de marche arrière (8), une dérivation de pression d'alimentation mène du conduit (13) à la soupape de réduction de pression (12) ainsi qu'à une troisième chambre annulaire (93) de la soupape de sécurité (9) et à une cinquième chambre annulaire (75) de la soupape de commutation 3-4 (7),

une pression réduite constituant une pression de commande est délivrée par une conduite de pression de commande (43) aux électrovannes (4a, 4b) et celles-ci sont reliées à l'appareil électronique de commande (3) par une ligne électrique de commande (31),

à partir de la première électrovanne (4a), une Première conduite de commande (41) mène à la deuxième chambre annulaire (72) de la soupape de changement de rapports 3-4 (7) et à une chambre à ressort (58) de la soupape de changement de rapports 1-2 (5), et à partir de la seconde électrovanne (4b) une seconde conduite de commande (42) mène aux premières chambres annulaires frontales (51, 61, 81, 91) de la soupape de sécurité de marche arrière (8), des soupapes de changement de rapports 1-2 et 2-3 (5, 6) et de la soupape de sécurité (9), ainsi qu'à une cinquième chambre annulaire (95) de cette soupape de sécurité, toutes les soupapes de changement de rapports (5, 6, 7), la soupape de sécurité de marche arrière (8) et la soupape de sécurité (9) comportent des chambres annulaires (51-57, 61-67, 71-77, 81-84, 91-95) usinées dans le corps de soupape et chacune un tiroir à pistons (50, 60, 80, 90) qui est poussé dans une position de butée par un ressort de compression (59, 69, 79, 86, 97) disposé dans une chambre à ressort (58, 68, 78, 85, 96), et la soupape de changement de rapports 1-2 (5) comporte en outre une liaison hydraulique allant de la troisième chambre annulaire (53) au frein (D) du rapport de marche arrière par une conduite (530) et une deuxième soupape à bille (K2), sa sixième chambre annulaire (56) est reliée par les conduites (560, 561) à la cinquième chambre annulaire (65) de la soupape de changement de rapports 2-3 (6), et sa deuxième (52) et sa septième chambre annulaire (57) comportent une mise en décharge, et son tiroir à pistons (50) comporte trois pistons de commande (501, 502, 503) pour former des arêtes de commande,

la soupape de changement de rapports 2-3 (6) comporte en outre une liaison hydraulique allant de la troisième chambre annulaire (63) au frein (C') par une conduite (630) et de la septième chambre annulaire (66) à l'embrayage (B) par une conduite (660), la première soupape à bille (K1) et une conduite (661), et au frein (C) par la quatrième chambre annulaire (64) et une conduite (640), sa deuxième (62) et sa septième chambre annulaire (67) ont une mise en décharge, et son tiroir à pistons (60) comporte trois pistons de commande (601, 602, 603) pour former des arêtes de commande,

la soupape de changement de rapports 3-4 (7) comporte en outre une liaison hydraulique allant de la quatrième chambre annulaire (74) par une conduite (740) jusqu'au frein (F) pour les rapports 1 à 3 et la marche arrière, et de la septième chambre annulaire (76) par une conduite (760) jusqu'à l'embrayage (E) du quatrième rapport, sa troisième et sa septième chambre annulaire (73, 77) ont une mise en décharge, et son tiroir à pistons (70) comporte quatre pistons de commande (701-704) pour former des arêtes de commande,

la soupape de sécurité de marche arrière (8) comporte en outre une liaison hydraulique allant de la troisième chambre annulaire (83) au frein (D) de marche arrière par une conduite (830) et une deuxième soupape à bille (K2) et allant à l'embrayage (B) par une conduite (831) et la première soupape à bille (K1) et une conduite (661), une dérivation (832) mène de la conduite (830) à la chambre à ressort (96) de la soupape de sécurité (9), sa quatrième chambre annulaire (84) comporte une mise en décharge, et son tiroir à pistons (80) comporte deux pistons de commande (801, 802) pour former des arêtes de commande, la soupape de sécurité (9) comporte en outre une liaison hydraulique allant de la quatrième chambre annulaire (94), par une conduite (940), jusqu'à la première chambre annulaire frontale (71) de la soupape de changement de rapports 3-4 (7), sa deuxième chambre annulaire (92) comporte une mise en décharge, et son tiroir à pistons (90) comporte trois pistons de commande (901-903) pour former des arêtes de commande, et en ce qu'il existe encore une liaison hydraulique allant de la conduite (640) à la conduite (560) et, par la conduite (564) et une troisième soupape à bille (K3) ne s'ouvrant que dans un sens, jusqu'au conduit (21) et par là jusqu'à l'embrayage (A).

8. Commande selon la revendication 6, caractérisée en ce que, en cas de panne de l'appareil électronique de commande (3) pendant la marche et de la mise en décharge correspondante des conduites de commande (41, 42), la soupape de sécurité (9) est maintenue en position enclenchée à travers le conduit de pression d'alimentation (13), tandis que sont fermés: l'embrayage (E) du quatrième rapport à travers la soupape de changement de rapports 3-4 (7) et la conduite (760), l'embrayage (A) directement à travers le conduit de pression d'alimentation (21), le frein (C) à travers la soupape de changement de rapports 1-2 (5) et les conduites (560, 562, 563), et l'embrayage (B) à travers les conduites (560, 561), la soupape de changement de rapports 2-3 (6), ainsi que la conduite (660), la soupape à bille (K1) et la conduite (661).

9. Commande selon la revendication 6, caractérisée en ce que, en cas de panne de l'appareil électronique de commande (3) avant le démarrage ou le redémarrage du moteur et la mise du tiroir de sélection (2) en position de marche avant (D), la pression d'alimentation est délivrée du conduit (13) à la soupape de changement de rapports 3-4 (7), à travers la soupape de sécurité (9) et la conduite (940), et actionne la soupape de changement de rapports 3-4 à l'encontre de la poussée d'un ressort (79), de sorte que l'embrayage du quatrième rapport (E) est mis en décharge et le frein (F) est fermé par la pression d'alimentation provenant du conduit (13) et de la conduite (740), et que sont fermés:l'embrayage (A) directement à travers le conduit de pression d'alimentation (21), le frein (C) à travers la soupape de changement de rapports 1-2 (5) et les conduites (560, 562, 563), et l'embrayage (B) à travers les conduites (560, 561), la soupape de changement de rapports 2-3 (6), ainsi que la conduite (660), la soupape à bille (K1) et la conduite (661).

10. Commande selon la revendication 6, caractérisée en ce que, en cas de panne de l'appareil électronique de commande (3) et de mise du tiroir de sélection (2) en position de marche arrière (R), la pression d'alimentation est transmise à la soupape de sécurité de marche arrière (8) à travers le canal (22), le frein (D) de marche arrière est fermé à travers la conduite (830) et la deuxième soupape à bille (K2), et l'embrayage (E) est fermé à travers la conduite (831), la première soupape à bille (K1) et conduite (661) tandis que' par la dérivation (832) de la conduite (830), la pression d'alimentation est transmise dans la chambre à ressort (96) de la soupape de sécurité (9) et enclenche celle-ci de telle façon que la pression d'alimentation provenant du conduit (13) enclenche la soupape de commutation 3-4 (7) à travers la conduite (940) et ferme le frein (F) à travers la conduite (740), tandis que l'embrayage (E) est mis en décharge à travers la soupape de changement de rapports 3-4 (7).

**Claims**

1. An electro-hydraulic control device for a motor vehicle transmission (G 1, G 2) to be actuated automatically, having a selector slider (2) at least for the neutral position (N) and for forward travel (D) and reverse travel (R), an electronic control unit (3) having solenoid valves (4) held in the vented neutral position by spring force, a source of pressure medium (11), pressure control- and pilot valves (6, 7, 8) for the actuation of gear-shift clutches- and brakes (A-F), and a change-down safety device for the prevention of change-down operations when the vehicle velocity is still too high, and a device which, in the event of failure of the electronics during travel, holds or actuates the automatic transmission (G 1, G 2) in respectively into the highest possible gear, characterised in that a safety valve (9) is disposed in a control device (5, 6, 7, 9) and, in the event of failure of the electronic control unit (3) during travel, is held in the actuated position by way of the system pressure (passage 13, annular chamber 93), and the clutch for the highest gear (E) is closed by way of the 3-4 pilot valve (7) located in an end position under the action of the spring (79), while, in the event of failure of the electronic control unit (3) before starting or restarting of the engine, the 3-4 pilot valve (7) is actuated by way of the system pressure (passage 13) and the non-actuated safety valve (9), and the brake (F) for a lower gear is closed.

2. A control device as claimed in claim 1, characterised in that travel in reverse gear is possible irrespective of failure of the electronic control device (3) after starting or restarting of the engine and displacement of the selector slider (2) into the reverse gear position (R) (Fig. 4).

3. A control device as claimed in claim 1, characterised in that travel in reverse gear is possible irrespective of failure of the electronic control device (3) upon displacement of the selector slider (2) into the reverse gear position (R) (Fig. 5).

4. A control device as claimed in claim 1, characterised in that moving off in a predetermined lower forward gear is possible with a failed electronic control unit (3) after starting of the engine and by displacement of the selector slider (2) into the forward travel position (D).

5. A control device as claimed in claim 1, characterised in the the control device is a hydraulic control device (5, 6, 7, 9).

6. A control device as claimed in claim 1, characterised in that three pilot valves (5, 6, 7), a safety valve (9), a reverse gear safety valve (8) and two solenoid valves (4a, 4b) are provided for actuation of an automatic 4-gear transmission.

7. A control device as claimed in claim 6, characterised in that

the pressure medium source (1) is connected, by way of a line (10), to the main pressure valve (11), to the selector slider (2) and to a passage (13) for the system pressure,

the selector slider (2) is connected, by way of a passage (21) for the system pressure, to the clutch for forward travel (A), and to a fifth annular chamber (55) of the 1-2 pilot valve (5) and, by way of a passage (22) filled with system pressure when the selector slider (2) is displaced into its reverse gear position, to a second annular chamber (82) of the reverse gear safety valve (8),

a system pressure branch leads from the passage (13) to the pressure-reducing valve (12) and to a third annular chamber (93) of the safety valve (9) and to a fifth annular chamber (75) of the 3-4 pilot valve (7),

a reduced pressure is fed as a control pressure to the solenoid valves (4a, 4b) by way of a control pressure line (43), and the said solenoid valves are connected to the electronic control unit (3) by way of an electrical control lead (31), a first control line (41) leads from the first solenoid valve (4a) to a second annular chamber (72) of the 3-4, pilot valve (7) and to a spring chamber (58) of the 1-2 pilot valve (5), and a second control line (42) leads from the second solenoid valve (4b) to the first, end annular chambers (51, 61, 81, 91) of the reverse gear safety valve (8), the 1-2 and 2-3 pilot valves (5, 6) and the safety valve (9), and to a fifth annular chamber (95) of the latter safety valve,

that all the pilot valves (5, 6, 7), the reverse gear safety valve (8) and the safety valve (9) have annular chambers (51-57, 61-67, 71-77, 81-84, 91-95) incorporated in the valve housing and respective piston valves (50, 60, 70, 80, 90) biassed into an end position by respective compression springs (59, 69, 79, 86, 97) disposed in respective spring chambers (58, 68, 78, 85, 96), and

the 1-2 pilot valve (5) has a further pressure medium connection leading from the third annular chamber (53) to the reverse gear brake (D) by way of a line (530) and a second ball valve (K 2), that the sixth annular chamber (56) is connected to the fifth annular chamber (65) of the 2-3 pilot valve (6) by way of the lines (560, 561), and the second annular chamber (52) and the seventh annular chamber (57) have a vent, and that the piston valve (50) has three control pistons (501, 502, 503) for forming control edges,

the 2-3 pilot valve (6) has a further pressure medium connection leading from the third annular chamber (63) to the brake (C') by way of a line (630), and from the sixth annular chamber (66) to the clutch (B) by way of a line (660), the first ball valve (K 1) and a line (661), and to the brake (C) by way of the fourth annular chamber (64) and a line 640, the second annular chamber (62) and the seventh annular chamber (67) have a vent, and that the piston valve (60) has three control pistons (601, 602, 603) for forming control edges.

the 3-4 pilot valve (7) has a further pressure medium connection leading from the fourth annular chamber (74) to the brake (F) for the lst to 3rd gears and the reverse gear by way of a line 740, and from the sixth annular chamber (76) to the clutch (E) for the 4th gear by way of a line (760), the third and seventh annular chambers (73, 77) have a vent, and that the piston valve (70) has four control pistons (701-704) for forming control edges,

the reverse gear safety valve (8) has a further pressure medium connection leading from the third annular chamber (83) to the reverse gear brake (D) by way of a line (830) and a second ball valve (K 2), and to the clutch (B) by way of a line (831) and the first ball valve (K 1) and a line (661), and a further branch (832) leads from the line (830) to the spring chamber (96) of the safety valve (9), the fourth annular chamber (84) has vent, and the piston valve (80) has two control pistons (801, 802) for forming control edges,

the safety valve (9) has a further pressure medium connection leading from the fourth annular chamber (94) to the first, end annular chamber (71) of the 3-4 pilot valve (7) by way of a line (940), the second annular chamber (92) has a vent, and the piston valve (90) has three control pistons (901—903) for forming control edges, and that a further pressure medium connection leads from the line (640) to the line (560), and to the passage (21) and hence to the clutch (A) by way of the line (564) and a third ball valve (K 3) opening only in one direction.

8. A control device as claimed in claim 6, characterised in that, in the event of failure of the electronic control unit (3) during travel and the associated venting of the control lines (41, 42), the safety valve (9) is retained in its actuated position by way of the system pressure passage (13), and the clutch (E) for the 4th gear is closed by way of the 3-4 pilot valve (7) and line (760), and the clutch (A) is closed directly by way of the system pressure passage (21), the brake (C) is closed by way of the 1-2 pilot valve (5) and the lines (560, 562, 563), the 2-3 pilot valve (6) is closed by way of the lines (560, 651), and the clutch (B) is closed by way of the line (660), the ball valve (K 1) and the line (661).

9. A control device as claimed in claim 6, characterised in that, in the event of failure of the electronic control unit (3) before starting or restarting of the engine, and actuation of the selector slider (2) to forward travel (D), the system pressure is fed from the passage (13) to the 3-4 pilot valve (7) by way of the safety valve (9) and the line (940) and displaces the 3-4 pilot valve (7) against the pressure of a spring (79), wherein the clutch (E) for the 4th gear is vented and the brake (F) is closed by way of the system pressure of the passage (13) and line (740), the clutch (A) is closed directly by way of the system pressure passage (21), the brake (C) is closed by way of the 1-2 pilot valve (5) and the lines (560, 562, 563), the 2-3 pilot valve (6) is closed by way of the lines (560, 561), and the clutch (B) is closed by way of the line (660), the ball valve (K 1) and the line (661).

10. A control device as claimed in claim 6, characterised in that, in the event of failure of the electronic control unit (3) and actuation of the selector slider (3) to reverse travel (R), the system pressure is fed to the reverse gear safety valve (8) by way of the passage (22), the reverse gear brake (D) is closed by way of the line (830) and the second ball valve (K 2), the clutch (E) is closed by way of the line (831), the first ball valve (K 1) and line (661), and system pressure is fed into the spring chamber (96) of the safety valve (9) by way of the branch (832) of line (830) and switches the safety valve (9) in such a way that system pressure from passage (13) switches the 3-4 pilot valve (7) by way of line (940), and the system pressure of passage (13) closes the brake (F) by way of the line (740), while the clutch (E) is vented by way of the 3-4 pilot valve (7).

**FIG.1**

**FIG.2**

**FIG.3**

| | MAGNETVENTILE | | KUPPLUNGEN/BREMSEN | | | | | | |
|---|---|---|---|---|---|---|---|---|---|
| | 4a | 4b | A | B | C | C' | D | E | F |
| G.1 | | ● | ● | | | | (●) | | ● |
| G.2 | ● | ● | ● | | ● | ● | | | ● |
| G.3 | ● | | ● | ● | ● | | | | ● |
| G.4 | | | ● | ● | ● | | | ● | |
| R. | | ● | | ● | | | ● | | ● |

FIG.4

EP 0 316 358 B1

FIG.5

EP 0 316 358 B1